# EUROPEAN PATENT APPLICATION

(11) **EP 1 120 793 A1**
(43) Date of publication of application: **01.08.2001**
(21) Application number: 00300522.0
(22) Date of filing: 25.01.2000
(51) Int. Cl.: G21C 5/10

(54) **Support structure for changeable fuel lattice for boiling water reactor**

(71) Applicant: GENERAL ELECTRIC COMPANY, Schenectady, NY 12345 (US)
(72) Inventor: Challberg, Roy Clifford, Livermore, California 94550 (US); Kossa, Irvin Raymond, SanJose, California 95125 (US)
(74) Representative: Pedder, James Cuthbert

(57) **Abstract**

An apparatus (102) for supporting fuel assemblies (104) in a reactor pressure vessel (106). The apparatus (102) has a support plate (108) extending across a portion of the reactor pressure vessel (106) with control rod drive housings (110) located below, and providing support for, the support plate (108). The apparatus (102) further includes guide tubes (114) at least partially supporting the fuel assemblies (104). The weight of the fuel assemblies (104) and the guide tubes (114) are supported by the support plate (108). The support plate (108) forms part of an inlet plenum that also includes a bottom head (132) of the reactor pressure vessel (106), a pump deck (130), and a seal (128). The reactor pressure vessel bottom head (132) includes a lattice array configuration of control rod drive housings (110). The lattice array configuration can be an N lattice array having approximately a 12.2 x 12.2 inch square pitch. The reactor pressure vessel (106) may instead include other lattice array configurations. The support structure (102) also includes fuel support platelets (126) and a platelet restraint frame (144) horizontally restraining the platelet (126). The support plate (108), platelet restraint frame (144), fuel support platelet (126), and flow tubes (112) are capable of being replaced in order to accommodate a change to a different lattice array configuration.

## Description

This invention relates generally to reactor pressure vessels for boiling water reactors and more particularly, to a support structure located within the reactor pressure vessel and a lattice array.

Light water reactor core configurations should allow for the capability of conversion from uranium to fissionable plutonium and recycling of plutonium. The current fuel economy may not justify this capability at the present time, so a configuration which facilitates providing this capability in the future offers a significant advantage. In addition, it would be desirable to reduce the length of refueling outages and to reduce the overall capital cost of a new plant. Refueling time could be reduced by reducing the number of fuel bundles. Capital cost could be reduced by reducing the number of expensive control rod drives.

Accordingly, it would be desirable to provide a support structure in a reactor pressure vessel that accommodates a change in configuration of the control rod drives, the control rods, and other internal components, as well as provides support for fuel assemblies and guide tubes.

In one embodiment of the invention, a boiling water reactor (BWR) has an initial core configuration that can be changed to accommodate future requirements for larger, and fewer, fuel assemblies and a reduction in number of control rod drives (CRDs). The initial configuration can also be changed to further accommodate fuel conversion made practical with advanced core lattices.

In order to accommodate a change in core configuration, specifically the pitch and size of the BWR fuel assemblies, a reactor core, internal components, and a reactor pressure vessel (RPV) permit installation of either standard size fuel located on a "conventional" pitch or a size and pitch that is approximately 1.414 or 2.000 times larger. The BWR allows conversion from the "conventional" currently used configuration to "future" configurations at any time in the life of the plant.

The BWR includes an apparatus for supporting fuel assemblies in a substantially cylindrical RPV. The apparatus, in one embodiment, includes a support plate extending across at least a portion of the RPV and a plurality of CRD housings located in the RPV below the support plate. The CRD housings are secured to, and provide support for, the support plate. The apparatus further includes a plurality of control rods in communication with the CRD housings, a plurality of flow tubes in communication with the fuel assemblies, and a plurality of control rod guide tubes. The fuel assemblies are supported, at least in part, by the control rod guide tubes. The support plate supports the weight of the fuel assemblies and the control rod guide tubes by transferring the weight of the fuel assemblies and the control rod guide tubes to the CRD housings.

The support plate serves as a flow partition forming part of an inlet plenum containing flow and directing the flow up through the flow tubes and then to the fuel assemblies. The plenum also includes a bottom head of the RPV, a pump deck, and a seal located between the support plate and the pump deck. The seal permits differential expansion between the support plate and the pump deck. The RPV bottom head contains the CRD housings.

Additionally, the apparatus has a plurality of fuel support platelets located at one end of the flow tubes and a grid horizontally restraining the fuel support platelets. The support plate, the grid, the fuel support platelets, and the flow tubes are capable of being replaced in order to accommodate a change to a different lattice array configuration.

Each control rod is sheltered from recirculation water and can be guided between a set of guide tubes. The control rods contain rollers configured to run between the guide tubes. The rollers are positioned on a lower portion of the control rods.

The fuel support platelets are arranged in rows and are located on the guide tubes. The fuel assemblies are located on the fuel support platelets and the fuel support platelets are engaged by the flow tubes. Each fuel support platelet has an orifice configured to provide a single phase pressure drop in the fuel assemblies. The flow tubes are sized to provide a single phase pressure drop and also induce added inertia to the flow. Spring loaded, adjustable snubbers are located at the ends of each row of fuel support platelets.

The RPV can contain a "conventional" N lattíce support plate configuration and core array. Initially, a reactor can be built with the RPV bottom head containing an N lattice configuration of the CRD housings as established by a conventional configuration with approximately a 12.2 x 12.2 inch square pitch. As future reactor core objectives change, the N lattice configuration may also be changed, by removal and replacement of reactor internal components, all of which facilitate replacement.

A major benefit of this support structure over known support structures is the ability to accommodate a change in configuration of the CRDs, the control rods, and other internal components, as well as providing support for fuel assemblies and guide tubes. The support structure allows a BWR to have an initial core configuration that can be changed to accommodate future requirements for larger, and fewer, fuel assemblies as well as allowing a reduction in number of CRDs. The support structure also allows the initial configuration to be changed to further accommodate fuel conversion made practical with advanced core lattices.

The invention will now be described in greater detail, by way of example, with reference to the drawings, in which:-

Figure 1 is a cross-section of a reactor vertical arrangement.

Figure 2 is a partial cross-section of the reactor vertical arrangement in Figure 1 as seen from A.

Figure 3 is a partial cross-section of the reactor vertical arrangement in Figure 1 as seen from B.

Figure 4 is a partial cross-section of the reactor vertical arrangement in Figure 1 as seen from C.

Figure 5 is a partial cross-section of the reactor vertical arrangement in Figure 1 as seen from D-D.

Figure 6 is a partial cross-section of the reactor vertical arrangement in Figure 1 as seen from E-E.

Figure 7 is a partial cross-section of the reactor vertical arrangement in Figure 6 as seen from F.

Figure 8 is a partial cross-section of the reactor vertical arrangement in Figure 6 as seen from G showing a snubber and a fuel platelet assembly.

Figure 9 is a side view of the snubber and fuel plate assembly shown in Figure 8.

Figure 10 shows a support plate having a conventional N lattice array configuration with approximately a 12.2 x 12.2 inch square pitch.

Figure 11 shows a core having a conventional N lattice array configuration with approximately a 12.2 x 12.2 inch square pitch.

Figure 12 shows a modification of a support plate having a K lattice array configuration with approximately a 1.414(12.2 x 12.2) inch square pitch.

Figure 13 shows a modification of a core having a K lattice array configuration with approximately a 1.414(12.2 × 12.2) inch square pitch.

Figure 14 shows an adaptation of a support plate for an H lattice array configuration with approximately a 1.414(12.2 x 12.2) inch square pitch.

Figure 15 shows an adaptation of a core for an H lattice array configuration with approximately a 1.414(12.2 x 12.2) inch square pitch.

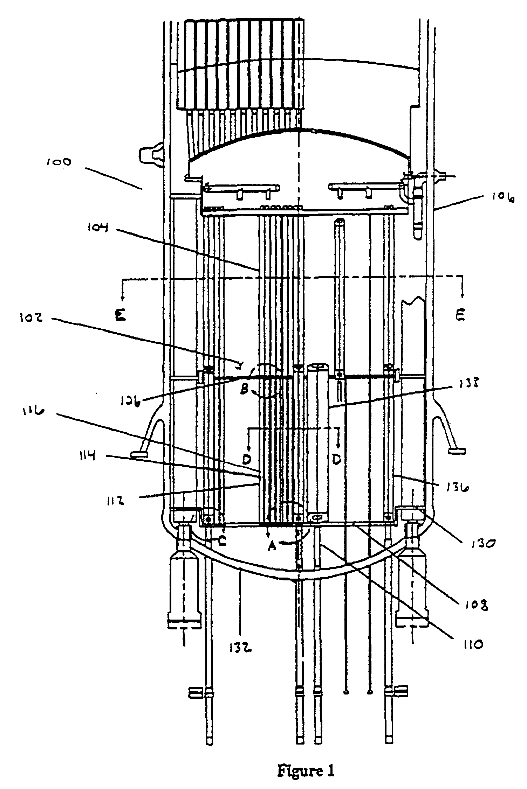

Figure 1 shows a cross-section of a reactor vertical arrangement 100. Reactor vertical arrangement 100 includes an apparatus 102 for supporting fuel assemblies 104 in a substantially cylindrical reactor pressure vessel (RPV) 106. Apparatus 102 includes a support plate 108 and a plurality of control rod drive (CRD) housings 110. Support plate 108 is mounted over CRD housings 110 and CRD housings 110 are configured to be located in RPV 106. CRD housings 110 are secured to, and provide support for. support plate 108 which is configured to extend across at least a portion of RPV 106. The manner in which CRD housings 110 engage support plate 108 provides freedom for relative expansion which may occur during reactor operating transients. Apparatus 102 also includes a plurality of flow tubes 112 in communication with fuel assemblies 104 and a plurality of control rod guide tubes 114. Flow tubes 112 and control rod guide tubes 114 are usually two separate tubes. In one embodiment, a single tube 116 functions as both control rod guide tube 114 and flow tube 112. An inner diameter of tube 116 is sized permit tube 116 to function as flow tube 112 and an outer diameter is sized to permit tube 116 to function as control rod guide tube 114. This sizing eliminates the need for two separate tubes and allows tube 116 to serve both functions.

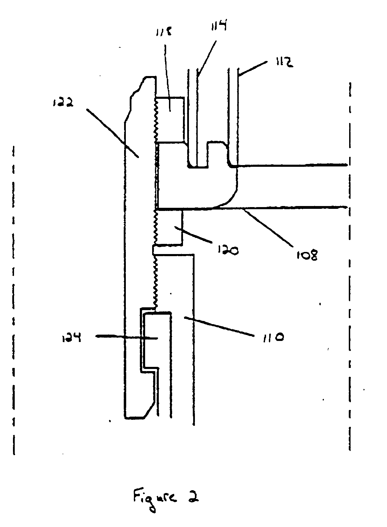

Figure 2 shows support plate 108 connected to CRD housing 110 via an upper support sleeve 118, a lower support sleeve 120, and a control rod support tube 122. Upper and lower support sleeves 118, 120, respectively, restrain support plate 108 and are connected to control rod support tube 122 which is connected to control rod drive housing 110. A fine motion control rod drive 124 is positioned between control rod support tube 122 and control rod drive housing 110. Support plate 108 supports the weight of fuel assemblies 104 and control rod guide tubes 114 by transferring the weight of each fuel assembly 104 carried on a control rod guide tube 114 to CRD housings 110. Support plate 108 also serves as part of a flow partition forming an inlet plenum containing flow from recirculating pumps and directing the flow up through flow tubes 112 and thence to fuel assemblies 104.

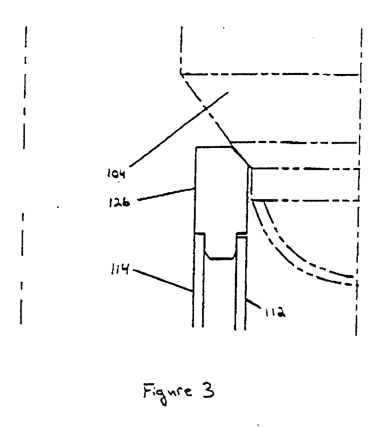

Figure 3 shows one of a plurality of fuel support platelets 126 positioned over guide tubes 114. Fuel support platelets 126 are engaged by flow tubes 112, typically in a set of four each, although the number of flow tubes 112 may vary as in the periphery of the core or with different core lattices. Fuel assemblies 104 sit on support platelets 126 in a conventional manner. An orifice (not shown) usually provided to create a single phase pressure drop in each fuel assembly inlet flow may be built into fuel support platelets 126. Alternatively, flow tubes 112 may be sized to provide the single phase pressure drop and also induce added inertia to the flow, which is desirable in controlling core stability or reducing core pressure drop.

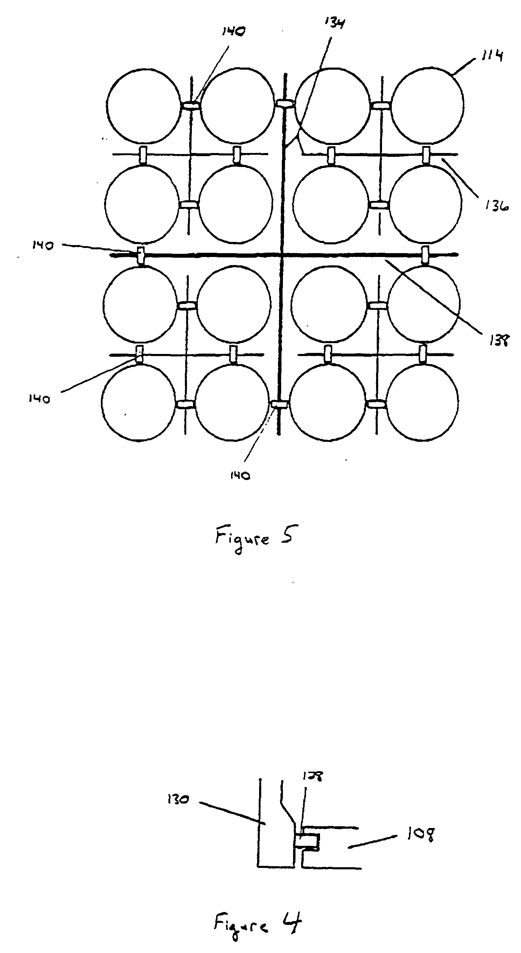

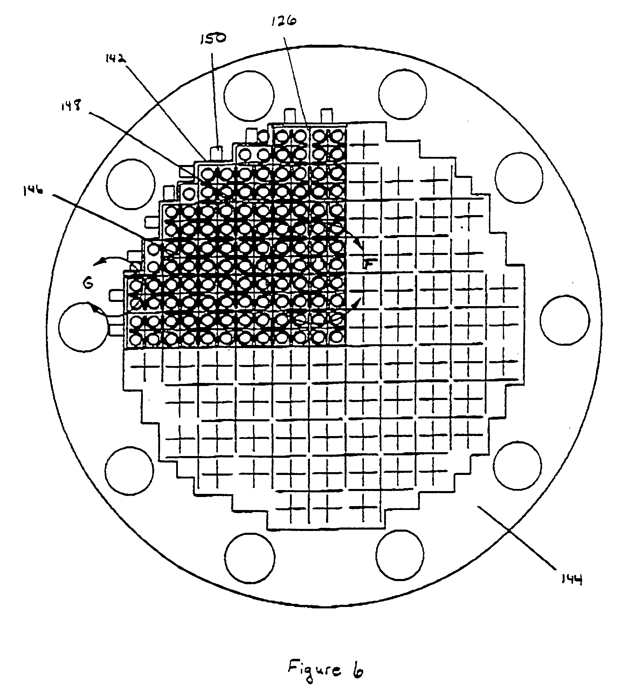

Figure 4 shows a seal 128 between a pump deck 130 and support plate 108. Seal 128 permits differential expansion between support plate 108 and pump deck 130. Support plate 108 is manufactured from Inconel 600 to minimize differential expansion between support plate 108 and CRD housings 110 mounted in an RPV bottom head 132. Seal 128, pump deck 130, and bottom head 132 form the remainder of the flow partition inlet plenum.

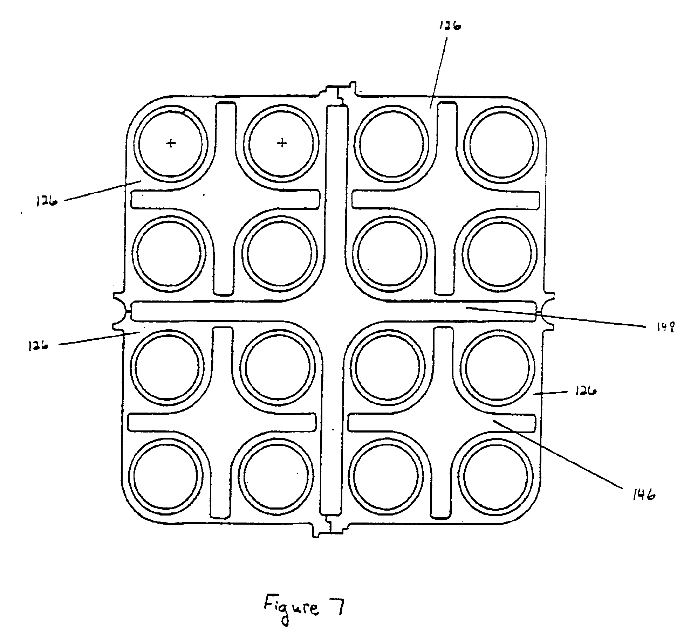

Figure 5 shows a plurality of control rods 134, including small control rods 136 and large control rods 138. Control rods 134 are in communication with CRD housings 110. Each control rod 134 is guided between a set of control rod guide tubes 114 as contrasted with the conventional guidance within a single guide tube. In either case, control rod 134 is sheltered from recirculation water flow which is on an opposite side of guide tube 114. Rollers 140 positioned on a lower portion of control rods 134 are configured to run between opposing guide tubes 114 just as rollers (not shown) on an upper portion of control rod 134 run conventionally between opposing fuel channels (not shown).

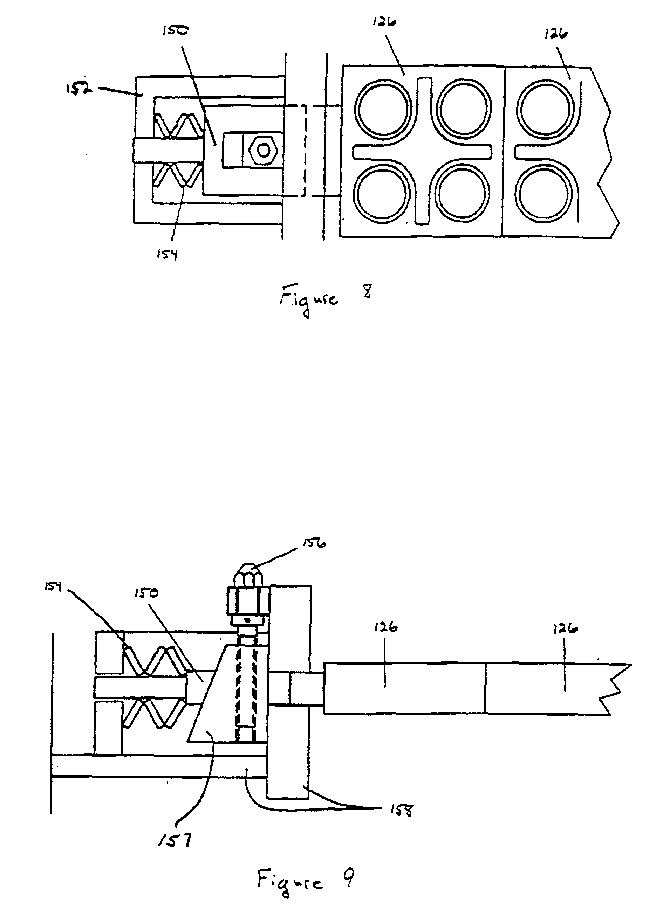

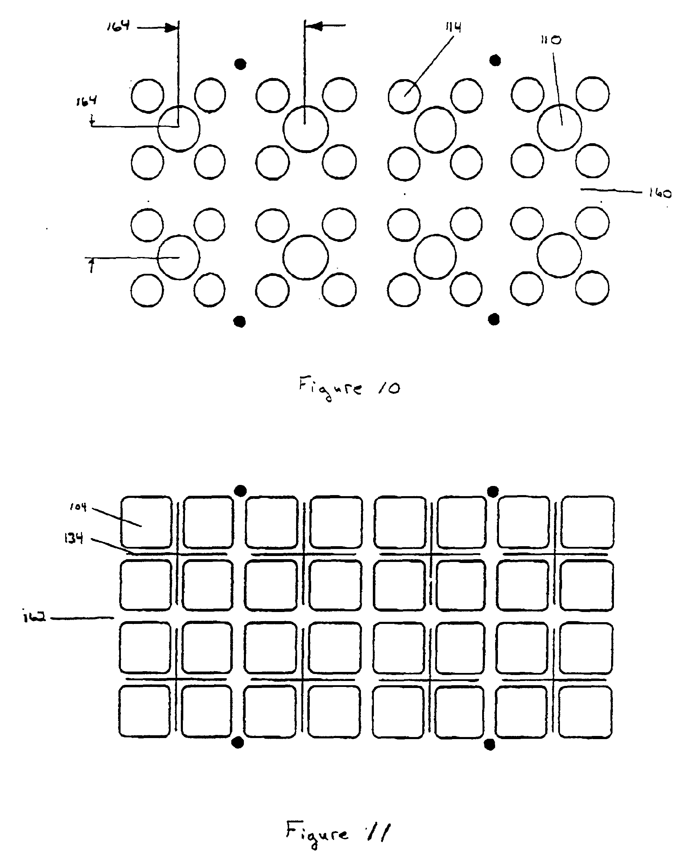

Figures 6 and 7 show an array 142 of fuel support platelets 126 horizontally restrained in a grid 144 (i.e. a platelet restraint frame). Grid 144 completely surrounds array 142 and is connected to a wall of RPV 106. Fuel support platelets 126 contain openings 146 for movement of smaller control rods through grid 144. A space 148 between fuel support platelets 126 allows movement of larger control rods 138 through grid 144.

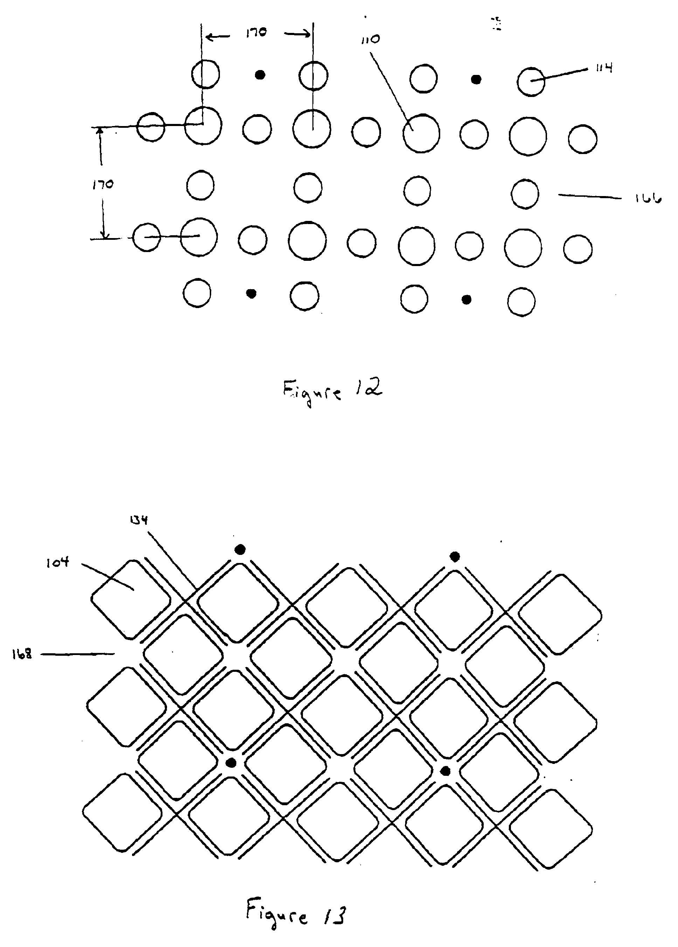

Figures 8 and 9 show a spring loaded, adjustable snubber 150 within a snubber restraint 152. Belleville springs 154 are positioned between snubber 150 and snubber restraint 152 and impart to snubber 142 a spring loaded quality. Adjustable snubbers 150 may be provided at each end of each row of fuel support platelets 126 for positioning each row, for eliminating clearances provided during initial assembly, and for allowing flexibility for differential expansion. A bolt 156 in communication with snubber 150 through wedge 157 is used to adjust the position of a row of fuel support platelets 126 relative to a support frame 158. Grid 144 provides the required lateral restraint for fuel support platelets 126 and in turn the bottom of the core.

The upper end of fuel assemblies 104 may be laterally restrained in a conventional grid (not shown), perhaps with small sections made removable to permit control rod 134 removal and replacement, depending on the lattice array and the size of control rods 134. Alternatively, upper tie plates (not shown) of fuel assemblies 104 may be made and laterally restrained similarly to grid 144 supporting fuel support platelets 126.

Figures 10 and 11 show a "conventional" N lattice support plate configuration 160 and core array 162. Initially, a reactor can be built with RPV bottom head 132 containing N lattice configuration 160 of CRD housings 110 as established by a conventional configuration with approximately a 12.2 x 12.2 inch square pitch 164. As future reactor core objectives change, N lattice configuration 160 may also be changed, by removal and replacement of reactor internal components, all of which facilitate replacement. Most internal components are small to facilitate disposal. To change to a different lattice array, support plate 108, grid 144, fuel support platelets 126, guide tubes 114, and flow tubes 112 are replaced.

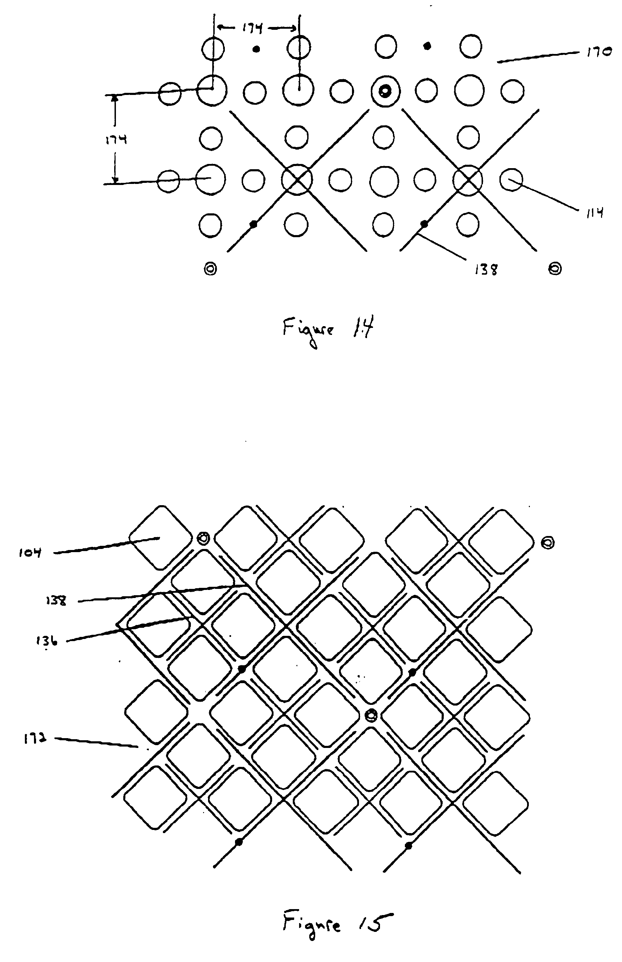

Figures 12 and 13 show a K lattice support plate configuration 166 and core array 168. A change from conventional N lattice configuration 160 having approximately a 12.2 x 12.2 inch square pitch 164 to K lattice configuration 166 with approximately a 1.414(12.2 x 12.2) inch square pitch 170 is accommodated by rotating the orientation of control rods 134 by approximately 45 degrees, and perhaps increasing their width. With K lattice support plate configuration 166 and core array 168, the number of fuel assemblies 104 in RPV 106 is reduced by approximately 50 percent and the number of control rods 134 and CRD housings 110 may be reduced somewhat.

Figures 14 and 15 show an H lattice support plate configuration 170 and core array 172. A change from conventional N lattice configuration 160 to H lattice configuration 170 having approximately a 1.414(12.2. x 12.2) inch square pitch 174 is similarly accommodated by eliminating approximately every other, about half, of control rods 134 and CRD housings 110 and replacing them with approximately half as many control rods 134 of approximately twice the width thereby reducing the total number of control rods 134 and CRD housings 110 by approximately 25 percent.

A change from conventional N lattice configuration 160 to either a K lattice configuration 166 or an N lattice configuration 160 having approximately a 2.0(12.2. x 12.2) inch square pitch can be accommodated by eliminating approximately every other, about half, of the control rods 134 and CRD housings 110.

Apparatus 102 can be retroactively applied to convert an existing RPV 106 to accommodate future core arrays. Apparatus 102 provides support for fuel assemblies 104 and guide tubes 114. As future requirements change, apparatus 102 can be changed to accommodate the reconfigured internal components. Apparatus 102 could use more conventional internal components such as the core plate (not shown), fuel support (not shown), and control rod guide tube 114. Most of these components would have to be replaced once a larger control rod pitch was desired.

## Claims

1. Apparatus (102) for supporting fuel assemblies (104) in a reactor pressure vessel (106), the reactor pressure vessel (106) being substantially cylindrical, said apparatus (102) comprising:
a support plate (108) configured to extend across at least a portion of the reactor pressure vessel (106); and
a plurality of control rod drive housings (110) configured to be located in the reactor pressure vessel (106) and below said support plate (108), said control rod drive housings (110) secured to, and providing support for, said support platc (108).

2. The apparatus (102) in accordance with Claim 1 further comprising:
a plurality of control rods (134) in communication with said control rod drive housings (110);
a plurality of flow tubes (112) in communication with the fuel assemblies (104); and
a plurality of control rod guide tubes (114), the fuel assemblies (104) supported, at least in part, by said control rod guide tubes (114), wherein said support plate (108) supports the weight of the fuel assemblies (104) and said control rod guide tubes (114) by transferring the weight of the fuel assemblies (104) and said control rod guide tubes (114) to said control rod drive housings (110).

3. The apparatus (102) in accordance with Claim 2 wherein said support plate (108) serves as a flow partition forming an inlet plenum containing flow and directing the flow up through said flow tubes (112) and then to the fuel assemblies (104).

4. The apparatus (102) in accordance with Claim 3 wherein said plenum further comprises:
a bottom head (132) of the reactor pressure vessel (106);
a pump deck (130); and
a seal (128) located between said support plate (108) and said pump deck (130), said seal (128) permitting differential expansion between said support plate (108) and said pump deck (130).

5. The apparatus (102) in accordance with Claim 4 wherein said support plate (108) comprises Inconel 600 for minimizing differential expansion between said support plate (108) and said control rod drive housings (110) mounted in said reactor pressure vessel bottom head (132).

6. The apparatus (102) in accordance with Claim 4 or 5 wherein said reactor pressure vessel bottom head (132) contains a lattice array configuration of said control rod drive housings (110), said lattice array configuration being an N lattice array (160) and having approximately a 12.2 x 12.2 inch square pitch.

7. The apparatus (102) in accordance with Claim 6 further comprising a plurality of fuel support platelets (126) and a platelet restraint frame (144) horizontally restraining said fuel support platelets (126), wherein said support plate (108), said platelet restraint frame (144), said fuel support platelets (126), and said flow tubes (112) are capable of being replaced in order to accommodate a change to a different lattice array configuration.

8. The apparatus (102) in accordance with any one of Claims 2 to 7 further comprising a plurality of guide tubes (114), wherein each said control rod (134) is guided between a set of said guide tubes (114).

9. The apparatus (102) in accordance with Claim 8 wherein said control rods (134) arc sheltered from recirculation water flow.

10. The apparatus (102) in accordance with Claim 8 or 9 further comprising rollers (140) positioned on a lower portion of said control rods (134), said rollers (140) configured to run between said guide tubes (114).

11. The apparatus (102) in accordance with Claim 9 further comprising a plurality of fuel support platelets (126) arranged in rows and located on said fuel supports (108) and said guide tubes (114), the fuel assemblies (104) being located on said fuel support platelets (126).

12. The apparatus (102) in accordance with Claim 11 wherein said fuel support platelets (126) have an orifice configured to provide a single phase pressure drop in the fuel assemblies (104).

13. The apparatus (102) in accordance with Claim 11 or 12 wherein said flow tube (112) is sized to provide a single phase pressure drop and also induce added inertia to the flow.

14. The apparatus (102) in accordance with Claim 11, 12 or 13 further comprising spring loaded, adjustable snubbers (150) provided at each end of each row of said fuel support platelets (126), said snubbers (150) for positioning each said row, for eliminating clearances provided during initial assembly, and for allowing flexibility for differential expansion.

15. Apparatus (102) for supporting fuel assemblies (104) in a reactor pressure vessel (106), the reactor pressure vessel (106) being substantially cylindrical, said apparatus (102) comprising:
a support plate (108) extending across at least a portion of the reactor pressure vessel (106);
a plurality of control rod drive housings (110) located in a lower portion of the reactor pressure vessel (106);
a bottom head (132) on the reactor pressure vessel (106);
a pump deck (130); and
a seal (128) located between said support plate (108) and said pump deck (130), said seal (128) permitting differential expansion between said support plate (108) and said pump deck (130).

16. The apparatus (102) in accordance with Claim 15 further comprising:
a plurality of control rods (134) in communication with said control rod drive housings (110);
a plurality of flow tubes (112) in communication with the fuel assemblies (104); and
a plurality of control rod guide tubes (114) supporting, at least in part, the fuel assemblies (104), wherein said support plate (108) supports the weight of the fuel assemblies (104) and said control rod guide tubes (114) by transferring the weight of the fuel assemblies (104) and said control rod guide tubes (114) to said control rod drive housings (110).

17. The apparatus (102) in accordance with Claim 16 further comprising a K lattice array (166) of said control rods (134) and said control rod drive housings (110), said K lattice array (166) having approximately a 1.414(12.2 x 12.2) inch square pitch, wherein with respect to a conventional N lattice array (160) having approximately a 12.2 x 12.2 inch square pitch, the orientation of said control rods (134) is rotated by approximately 45 degrees, and the fuel assemblies (104) are reduced in number by approximately 50 percent.

18. The apparatus (102) in accordance with Claim 16 further comprising an H lattice array (170) of said control rods (134) and said control rod drive housings (110), said H lattice array (170) having approximately a 1.414(12.2 × 12.2) inch square pitch, wherein with respect to a conventional N lattice array (160) having approximately a 12.2 x 12.2 inch square pitch, the orientation of said control rods (134) is rotated by approximately 45 degrees and approximately half of said control rods (134) and approximately half of said control rod drive housings (110) are eliminated and are replaced with approximately half as many said control rods (134) of approximately twice the width, thereby reducing in number said control rods (134) and said control rod drive housings (110) by approximately 25 percent.

19. The apparatus (102) in accordance with Claim 16 further comprising an N lattice array (160) of said control rods (134) and said control rod drive housings (110), said N latticc array (160) having approximately a 2.0(12.2 x 12.2) inch square pitch, wherein with respect to a conventional N lattice array (160) having approximately a 12.2 x 12.2 inch square pitch, said control rods (134) and said control rod drive housings (110) are reduced in number by approximately 50 percent by removing approximately every other said control rod (134) and said control rod drive housing (110).

20. The apparatus (102) in accordance with Claim 16 further comprising a K lattice array (166) of said control rods (134) and said control rod drive housings (110), said K lattice array (166) having approximatcly a 2.0(12.2 x 12.2) inch square pitch, wherein with respect to a conventional N lattice array (160) having approximately a 12.2 x 12.2 inch square pitch, said control rods (134) and said control rod drive housings (110) are reduced in number by approximately 50 percent by removing approximately every other said control rod (134) and said control rod drive housing (110).
